# EUROPÄISCHE PATENTSCHRIFT

(11) **EP 1 469 970 B1**
(45) Veröffentlichungstag und Bekanntmachung des Hinweises auf die Patenterteilung: **19.05.2010**
(21) Anmeldenummer: 02806557.1
(22) Anmeldetag: 22.01.2002
(51) Int. Cl.: B23Q 39/04

(54) **RUNDTAKTBEARBEITUNGSMASCHINE**
REVOLVING PHASED MACHINE TOOL
MACHINE D'USINAGE ROTATIF CADENCEE

(43) Veröffentlichungstag der Anmeldung: 27.10.2004
(73) Patentinhaber: Pfiffner Engineering, 8700 Küsnacht (CH)
(72) Erfinder: OTT, Norbert, 78667 Villingen-Dorf (DE); PFIFFNER, Karl, Richard, CH-8700 Küsnacht (CH)
(74) Vertreter: Troesch Scheidegger Werner AG
(86) Internationale Anmeldenummer: PCT/CH2002/000034
(87) Internationale Veröffentlichungsnummer: WO 2003/061903

(56) Entgegenhaltungen:
- US-A- 4 520 595
- US-A- 5 815 902

## Beschreibung

Die vorliegende Erfindung betrifft eine Rundtaktbearbeitungsmaschine für die Bearbeitung von in einer Mehrzahl von rotierenden, an einem zentralen Schalttisch angeordneten Spannsystemen festgehaltenen Werkstücken, mittels in den Spannsystemachsen bzw. im rechten Winkel über diesen angeordneten Bearbeitungseinheiten. Eine Maschine dieser Art ist z.B. aus US-A-5 815 902 bekannt.

Rundtaktbearbeitungsmaschinen dienen zur ein- und mehrseitigen Bearbeitung von Werkstücken mit relativ komplexer Struktur mittlerer und hoher Stückzahl, insbesondere mit Bohr-, Senk-, Gewinde- und Fräsoperationen. Entsprechend der Fertigungsaufgabe werden die Werkstücke, z.B. nach Ablängung von Stangenmaterial, durch die einzelnen Arbeitsstationen getaktet. An allen Arbeitsstationen, gebildet aus einem Spannsystem und einer Bearbeitungseinheit, sind damit Werkstücke gleichzeitig in Bearbeitung. Die Bearbeitungseinheiten werden entsprechend der eingestellten Vorschubgeschwindigkeit auf die Werkstücke zu bewegt. Nachdem die Einheiten nach Durchführung ihrer Arbeit die Endlage ihres jeweiligen Vorschubweges erreicht haben, fahren sie im Eilgang in die Ausgangslage zurück. Sobald alle Bearbeitungseinheiten ihre Arbeit beendet haben, schaltet der Schalttisch mit den daran angeordneten Spannsystemen einen Schritt weiter. Nach jedem Arbeitstakt ist jeweils ein Werkstück fertig bearbeitet und wird entladen (zwischen der letzten und der ersten Arbeitsstation).

Es sind Rundtaktbearbeitungsmaschinen der vorgenannten Art bekannt, bei welchen am Schalttisch 12 Spannsysteme angeordnet sind und rund um den Schalttisch 12 horizontale und 6 vertikale Bearbeitungseinheiten eingerichtet sind. Jede Bewegung, wie z.B. Vorschubgeschwindigkeit und Eilganglänge, ist an jeder Einheit mit einem programmierbaren hydraulischen Steuerventil stufenlos einstellbar, was auch eine schnelle Umrüstung auf neue Fertigungsaufgaben erlaubt.

Falls ein Werkstück von beiden Seiten (in axialer Richtung gesehen) zu bearbeiten ist, kann an der entsprechenden Station eine Wendevorrichtung vorgesehen werden, welche das Werkstück aus dem Spannsystem löst, wendet und wieder in das Spannsystem einsetzt.

Bei den heutigen Rundtaktbearbeitungsmaschinen ist der Schalttisch mit den darin integrierten Spannsystemen horizontal (oder gegebenenfalls vertikal) aufgebaut, wobei die Spannsysteme oft starr, zur Vermeidung gewisser betrieblicher Nachteile aber vermehrt auch rotierend, am Schalttisch angeordnet sind.

Bei den horizontalen rotierenden Spannsystemen werden die Spannzangen in der Regel durch einen gemeinsamen Antrieb zentral angetrieben, was jedoch aufgrund der geforderten Anwendungen nicht immer sinnvoll ist, da sich insbesondere der damit verbundene Wärmegang sehr negativ auf die Genauigkeit der Maschine auswirkt.

Andere Anordnungen der horizontal rotierenden Spannsysteme, z.B. individueller Antrieb vom Innern des Schalttisches aus, bedingt eine Vergrösserung des Durchmessers des Schalttisches und beeinflusst damit negativ die Schaltzeiten, den Platzbedarf, die Zugänglichkeit und die Bedienbarkeit der Maschine.

Aufgabe der vorliegenden Erfindung war es, eine Rundtaktbearbeitungsmaschine mit rotierenden Spannsystemen zu schaffen, welche individuell antreibbar (steuerbar) sind und dabei einen wesentlich geringeren Platzbedarf verlangen als herkömmliche Maschinen.

Diese Aufgabe wird bei einer Rundtaktbearbeitungsmaschine der eingangs definierten Art erfindungsgemäss durch die Merkmale gemäss dem kennzeichnenden Teil von Anspruch 1 gelöst.

Dank dieser Lösung liegen frei zuschaltbare rotierende Spannsysteme vor, von denen jedes als motorische Dreh- und Positionierachse ausgelegt ist, dies bei geringstem Platzbedarf.

Die Erfindung wird nachstehend anhand eines in der Zeichnung dargestellten Ausführungsbeispiels noch etwas näher erläutert.

Es zeigt:
- Fig. 1: einen Schnitt durch einen handelsüblichen Rundtaktautomaten, und
- Fig. 2: rein schematisch eine Teilansicht, im Schnitt einer Rundtaktmaschine mit erfindungsgemäss angeordneten Spannsystemen und Bearbeitungseinheiten.

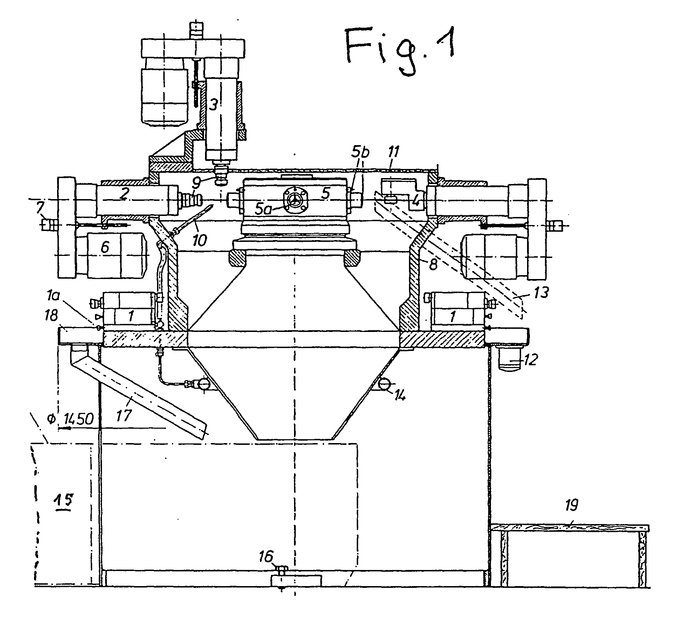

Figur 1 der Zeichnung zeigt den Grundaufbau einer heutigen Rundtaktbearbeitungsmaschine mit den wesentlichsten Bauelementen (Stand der Technik), deren Funktion bereits in der Beschreibungseinleitung erläutert wurde.

Es bedeuten: 1 ein hydraulisches Steuerventil für Bearbeitungseinheiten, 1a einen Schalter zum Ausschalten des Steuerventils, 2 eine horizontal angeordnete Bearbeitungseinheit, 3 eine vertikal angeordnete Bearbeitungseinheit (solche Einheiten können aus Platzgründen abwechslungsweise in jeder zweiten Arbeitsstation angeordnet werden), 4 ein Schleifkopf an einer Bearbeitungseinheit, 5 den Schalttisch mit Spannfuttern 5a, 5b Spannfutterbefestigungsschrauben (die Spannsysteme können fix oder rotierend sein), 6 einen Antriebsmotor für eine Bearbeitungseinheit, 7 eine Einstellspindel (axiale Position) für die Bearbeitungseinheit, 8 einen Haltebügel oder ein -chassis für Bearbeitungseinheiten, 9 Werkzeugköpfe an den Bearbeitungseinheiten, 10 Kühlmittelzufuhr, 11 ein Schutzglas gegen Späne, 12 einen Befestigungssockel für Antriebsmotoren, 13 den Werkstückentladekanal, 14 Kühlmittelzufuhrleitung, 15 den Kühlmittelfilter, 16 Nivellierungsschrauben, 17 Kühlmittelabfluss aus Sammelkanal 18 und 19 eine Plattform für die Bedienungsperson.

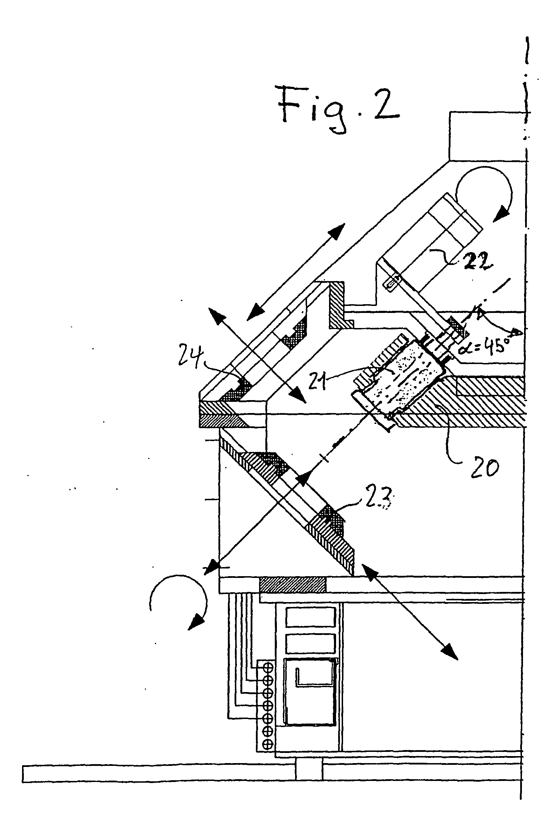

Figur 2 zeigt nun rein schematisch die erfindungsgemässe Anordnung der Spannsysteme und damit zusammenhängend der Bearbeitungseinheiten (nur deren beliebig einstellbaren Halteplatten gezeigt).

Der wesentlichste Unterschied zu den bekannten Rundtaktmaschinen liegt darin, dass die rotierenden Spannsysteme 21 in einem zur Horizontalen geneigten Winkel α, am Schalttisch 20 angeordnet sind. Der Neigungswinkel α beträgt 30 - 60°, vorzugsweise 45°.

Die um 45° geneigte Anordnung der Dreh- und Positionierachse der Spannsysteme erlaubt die Anordnung von Antriebsmotoren 22 auf der Innenseite oberhalb des Schalttisches 20.

Die Befestigungsplatten 23 bzw. 24 für die Bearbeitungseinheiten (der Uebersicht halber hier nicht eingezeichnet) lassen sich problemlos in der Verlängerung der Achse der Spannsysteme 21 bzw. senkrecht zu dieser Achse anordnen. Beim gezeigten Beispiel sind die Befestigungsplatten 23, 24 in einstellbaren Stellungen einrichtbar bzw. verstellbar (z.B. durch CNC-Steuerungen). Die Positionierung über digitale Eingaben ist damit mit dem Rechner frei programmierbar (motorische oder elektrohydraulische Antriebe).

Beim gezeigten Beispiel ist der Takttisch hängend eingebaut, was den Platzbedarf optimiert und zudem eine freie Späneabfuhr ermöglicht.

Die Zufuhr der Werkstücke kann trotzdem horizontal erfolgen, wobei eine Schwenkvorrichtung erforderlich ist, um das zu bearbeitende Werkstück zu schwenken und in die geneigte Arbeitsachse einzuführen.

Dank der vorliegenden Erfindung ist es möglich, bei optimierten Platzverhältnisssen mit rotierenden Spannsystemen zu arbeiten und damit die besten Voraussetzungen für eine rationelle Bearbeitung von Werkstücken zu schaffen, insbesondere auch kubischen Werkstücken, dank der rotierenden Dreh- und Positionierachse der Spannsysteme in Verbindung mit CNC-Bearbeitungseinheiten.

Die Möglichkeit der zentralen Anordnung der Antriebsmotoren für die Spannsysteme im zentralen Bereich oberhalb des Takttisches gewährleistet eine ideale Wärmeabfuhr, was wiederum zu höchster Präzision führt (keine negative Beeinflussung der Laufgenauigkeit der Maschine).

## Patentansprüche

1. Rundtaktbearbeitungsmaschine für die Bearbeitung von in einer Mehrzahl von rotierenden, an einem zentralen Schalttisch angeordneten Spannsystemen festgehaltenen Werkstücken, mittels in den Spannsystemachsen bzw. im rechten Winkel über diesen angeordneten Bearbeitungseinheiten, **dadurch gekennzeichnet, dass** die rotierenden Spannsysteme bezüglich der Horizontalen unter einem vorbestimmten Winkel am Schalttisch angeordnet sind, wobei die motorischen Dreh- und Positionierachsen der Spannsysteme zur vertikalen Drehachse des Schalttisches unter einem Winkel an letzterem angeordnet sind, wobei die Spannsystemachsen von aussen zur Schalttischdrehachse hin ansteigend verlaufen.

2. Maschine nach Anspruch 1, **dadurch gekennzeichnet, dass** der Neigungswinkel der Spannsystemachse bezüglich der Horizontalebene 30° - 60°, vorzugsweise 45° beträgt.

3. Maschine nach Anspruch 1 oder 2, **dadurch gekennzeichnet, dass** die Antriebseinheit für die geneigt verlaufende Dreh- und Positionierachse jedes Spannsystems hinter der Spannzange oberhalb dem Schalttisch liegt.

4. Maschine nach einem der Ansprüche 1 bis 3, **dadurch gekennzeichnet, dass** die Bearbeitungseinheiten CNCgesteuert am Maschinenchassis angeordnet sind.

## Claims

1. Revolving phased machine tool for the treatment of workpieces held with the aid of clamping systems being arranged on a central switch table by treatment units arranged in the axes of the clamping systems or in the right angle above these, respectively, **characterized in that** the clamping systems are arranged on the switch table in an angle predetermined with respect to the horizontal, the rotation and positioning driving axes of the clamping systems being arranged on the vertical revolving axis of the switch table below an angle of the latter, the axis of the clamping systems running in raising manner from the outside to the axis of the switch table.

2. Machine according to claim 1, **characterized in that** the inclining angle of the axis of the clamping systems is 30° - 60° with respect to the horizontal plain, preferably 45°.

3. Machine according to claim 1 or 2, **characterized in that** the drive unit for the rotation and positioning axis running in inclining manner of each clamping system is situated behind the clamping tongs above the switch table.

4. Machine according to one of the claims 1 to 3, **characterized in that** the treatment units are arranged CNC controlled on the chassis of the machine.

## Revendications

1. Machine d'usinage rotatif cadencée pour le traitement des pièces à usiner tenues par systèmes de serrage étant arrangées à une table à commutation centrale par des unités usinage arrangées dans les axes de systèmes de serrage ou dans l'angle droit par-dessus de celles-ci, respectivement, **caractérisé en ce que** les systèmes de serrage rotatifs sont arrangés à la table à commutation sous un angle prédéterminé par rapport à la horizontale, les axes de rotation et de positionnement moteurs des systèmes de serrage étant arrangés à l'axe rotatif vertical de la table à commutation sous un angle à la dernière, les axes systèmes de serrage courant de manière montants de l'extérieur vers l'axe de table à commutation.

2. Machine selon la revendication 1, **caractérisé en ce que** l'angle d'inclinaison de l'axe des systèmes de serrage est 30° - 60° par rapport au plan horizontal, préférablement 45°.

3. Machine selon la revendication 1 ou 2, **caractérisé en ce que** l'unité d'entraînement pour l'axe de rotation et de positionnement courant de manière inclinée de chaque système de serrage est située par derrière la pince de serrage au-dessus de la table à commutation.

4. Machine selon une des revendications 1 à 3, **caractérisé en ce que** les unités usinage sont arrangées de manière commande CNC au châssis de la machine.
